# EUROPEAN PATENT APPLICATION

(11) **EP 2 081 093 A2**
(43) Date of publication of application: **22.07.2009**
(21) Application number: 09000514.1
(22) Date of filing: 15.01.2009
(51) Int. Cl.: G05B 19/042, G06F 13/42

(54) **Vehicle control apparatus**

(30) Priority: 18.01.2008 JP 2008009414
(71) Applicant: Hitachi Ltd., Chiyoda-ku Tokyo 100-8280 (JP)
(72) Inventor: Morita, Yuichiro, Tokyo 100-8220 (JP); Narisawa, Fumio, Tokyo 100-8220 (JP); Hashimoto, Koji, Tokyo 100-8220 (JP); Motoyama, Nobuhisa, Tokyo 100-8220 (JP); Yoshimura, Kentaro, Tokyo 100-8220 (JP); Miyake, Junji, Tokyo 100-8220 (JP)
(74) Representative: Beetz & Partner

(57) **Abstract**

A vehicle control apparatus having plural micro controllers interconnected by serial communication realizes data referencing between the microcontrollers without increasing the load on the CPUs and enables the development of control application software easily. The vehicle control apparatus includes plural processing units (1a,1b) each having a computing means (10a), a data storage means (11a), and a communication means (15a). Each of the plural processing units (1a,1b) has a data update monitoring means (13a) which monitors access to the data storage means (11a), acquires, upon detecting update of data in the data storage means (11a), the updated data and a corresponding address, transfers the data and address to the communication means (15a), and starts transmission to another one or more of the plural processing units (1a,1b).

## Description

### BACKGROUND OF THE INVNTION

### 1.FIELD OF THE INVENTION

The present invention relates to a vehicle control apparatus using electronic control for vehicle driving, steering, and braking.

### 2.DESCRIPTION OF THE RELATED ART

In recent years, the application of electronic control to automobiles has been rapidly expanding with aims of improving fuel efficiency, complying with exhaust gas regulations, and securing driving safety and amenity. An automobile includes many controllers. They are used to control not only such driving parts as an engine, a transmission, brakes, and a steering system but also air bags, doors, and mirrors and so on.

Basically, such controllers obtain information on parts to control from various sensors and information on driver's instructions from operation switches. Based on information on vehicle conditions and driver's instructions thus obtained, they control actuators such as solenoid valves and motors.

The sensor output signals include analog signals and pulse signals. Controllers are, therefore, provided with an A/D converter which converts an analog signal voltage into a digital value and a timer which converts a pulse signal period into a digital value.

Actuators such as solenoid valves and motors are controlled by pulse signals such as PWM pulse signals, so that controllers to control such actuators are provided with a timer to output a pulse signal. Controllers are also provided with general input/output ports which are used to input operation switch information or input and output digital signals for performing simple on/off control for solenoid valves.

Generally, therefore, a controller includes microcontrollers each having such elements as a central processing unit (CPU), memory, A/D converter, timer, and general input/output ports and being integrated on a single chip. Using such microcontrollers for a vehicle control apparatus contributes toward reducing the number of components of the device and allows required circuit boards to be designed efficiently.

The processing performance and the number of inputs/outputs required of each CPU to be included in a microcontroller, however, depends on the system to be controlled, for example, an engine, a transmission, or a brake system. Even among CPUs used to control a similar type of systems, the requirements vary with grades of automobiles on which the controllers are to be mounted. It is, therefore, necessary to prepare and use a large variety of microcontrollers which can meet diversified requirements. This makes it necessary to arrange software development environments and build up design assets corresponding to various kinds of required microcontrollers.

To cope with the above situation, a method has been disclosed in which discrete LSIs respectively including a microcontroller mainly formed of a CPU and memory, a sensor input section mainly formed of an A/D converter, and a control pulse output section integrated with an actuator driver are prepared and in which arbitrary numbers of the respective LSIs are interconnected by serial communication (see "New Serial Microcontroller Links - Micro-Link-Interface And Micro-Second-Channel," SAE-2003-01-0112).

In the method, as many microcontrollers and input/output LSIs as required depending on the CPU's processing performance and the number of inputs and outputs required to control the related system can be mounted on a controller. It is, therefore, possible to develop controllers to control various systems using a same type of microcontrollers.

In the above method, to realize data referencing between microcontrollers, it is necessary to transfer data by serial communication from a microcontroller storing data to be referenced to a referencing microcontroller.

In the method disclosed in the above-referenced document, data is transferred between microcontrollers using a serial communication means. Transferring data between two microcontrollers using a serial communication means, however, requires the two microcontrollers, i.e. the transmitting microcontroller and the receiving microcontroller, to perform communication processing. This increases the loads on the related CPUs.

The present invention has been made to solve the above problem, and is aimed at realizing data referencing between microcontrollers without increasing the load on the CPUs and enabling control application software to be developed with ease.

### SUMMARY OF THE INVENTION

To solve the above problem, the present invention provides a vehicle control apparatus comprising a plurality of processing units each having a computing means, a data storage means, and a communication means according to one of the independent claims. Each of the plurality of processing units has a data update monitoring means which monitors access to the data storage means and, upon detecting update of data in the data storage means, sends the updated data and a corresponding address to another one or more of the plurality of processing units via the communication means.

Since the computing means is not required to perform processing to transmit updated data to other ones of the processing units via the communication means, no processing load is imposed on the computing means.

In the vehicle control apparatus, each of the processing units has a data transfer means which transfers data, at least, between the data storage means and the communication means. And the data update monitoring means transfers, upon detecting update by the computing means of data in the data storage means, the updated data and the corresponding address to the communication means via the data transfer means.

Making the data transfer means available as a function generally applicable to various types of DMA transfers will allow the circuit configuration of the data update monitoring means to be simplified.

In the vehicle control apparatus, the data update monitoring means has a data address area setting means which sets a data address area to be monitored of the data storage means. The data update monitoring means acquires, only upon detecting update of data in the data address area set by the data address area setting means, the updated data and the corresponding address, transfers the data and the address to the communication means, and starts transmission to another one or more of the plurality of processing units.

This allows that the data communications is performed only when data to be referred to is updated, so that the load on data transfer paths can be reduced.

In the vehicle control apparatus according to the present invention, each of the processing units has a data transfer means which transfers data, at least, between the data storage means and the communication means. And the communication means writes, when data and an address are received from another one of the plurality of processing units, the received data to the data address area specified by the received address of the data storage means via the data transfer means.

Since the computing means is not required to perform processing to write data received from another one of the processing units to the data storage means via the communication means, no processing load is imposed on the computing means.

According to the present invention, data referencing between microcontrollers can be realized without increasing the load on the CPUs and control application software can be developed with ease.

### BRIEF DESCRIPTION OF THE DRAWINGS

FIG. 1 is a block diagram of a first basic configuration of the vehicle control apparatus according to an embodiment of the present invention;
FIG. 2 is a block diagram of a memory access monitoring unit (MON) 13a according to the embodiment;
FIG. 3 is a flowchart of processing performed by the memory access monitoring unit (MON) 13a according to the embodiment;
FIG. 4 is a block diagram of a direct memory access control unit (DMAC) 14a according to the embodiment;
FIG. 5 is a flowchart of processing performed by the direct memory access control unit (DMAC) 14a according to the embodiment ;
FIG. 6 is a block diagram of a serial communication interface unit (SCI) 15a according to the embodiment;
FIG. 7 is a flowchart of transmission processing performed by the serial communication interface unit (SCI) 15a according to the embodiment;
FIG. 8 is a flowchart of reception processing performed by the serial communication interface unit (SCI) 15a according to the embodiment; and
FIG. 9 is a time chart of a process in which data in a microcontroller 1a to be referred to by a microcontroller 1b is updated.

### DETAILED DESCRIPTION OF THE PREFERRED EMBODIMENT

An embodiment of the vehicle control apparatus according to the present invention will be described below with reference to the drawings.

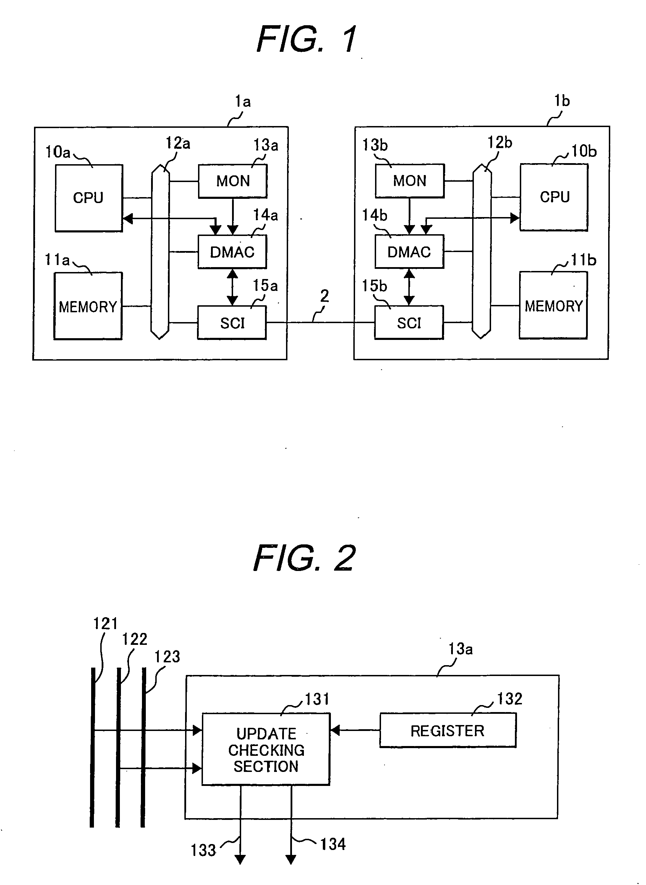

FIG. 1 is a block diagram of a first basic configuration of the vehicle control apparatus according to the present invention. The vehicle control apparatus includes microcontrollers 1a and 1b interconnected by a serial transmission path 2. The microcontrollers 1a and 1b may be mounted on a same circuit board. Or theymaybe mounted on different circuit boards and installed either in a same housing or in different housings.

The microcontroller 1a includes a central processing unit (CPU) 10a which executes programs, a memory 11a which stores programs and data, a memory access monitoring unit (MON) 13a, a direct memory access control unit (DMAC) 14a, and a serial communication interface unit (SCI) 15a. These components of the microcontroller 1a are connected to a bus 12a through which data is exchanged. The microcontroller 1b is configured identically with the microcontroller 1a.

Namely, the microcontroller 1b includes a central processing unit (CPU) 10b, a memory 11b which stores programs and data, a memory access monitoring unit (MON) 13b, a direct memory access control unit (DMAC) 14b, a serial communication interface unit (SCI) 15b, and a bus 12b.

Relating to the terms used in the following description of the microcontroller 1a: the "computing means" includes the central processing unit (CPU) 10a; the "transmission path" includes the serial transmission path 2; the "data storage means" includes the memory 10a; the "data update monitoring means" includes the memory access monitoring unit (MON) 13a; the "data transfer means" includes the direct memory access control unit (DMAC) 14a; and the "communication means" includes the serial communication interface unit (SCI) 15a.

The memory access monitoring unit (MON) 13a monitors access made from the CPU 10a to the memory 11a via the bus 12a. Upon detecting a write access from the CPU 10a to a predetermined copy area of the memory 11a, the memory access monitoring unit (MON) 13a acquires the access destination address outputted to the bus 12a and gives the acquired address to the direct memory access control unit (DMAC) 14a together with a DMA transfer (data transfer by direct memory access) start signal.

The direct memory access control unit (DMAC) 14a can execute data transfer between the memory 11a and the serial communication interface unit (SCI) 15a without being intervened by the CPU 10a.

When the access destination address and the DMA transfer start signal are received from the memory access monitoring unit (MON) 13a, the DMAC 14a reads the data stored at the access destination address of the memory 11a and transfers the data to the SCI 15a. In cases in which an address and a DMA transfer start signal are received from the SCI 15a, the DMAC 14a reads the data stored at the address of the SCI 15a and transfers the data to the memory 11a.

The serial communication interface unit (SCI) 15a exchanges data with, for example, another microcontroller via the serial transmission path 2. The serial communication interface unit (SCI) 15a, operating in conjunction with the direct memory access control unit (DMAC) 14a, enables data referencing between the microcontrollers. When a request for serial data transfer is received from the DMAC 14a, the SCI 15a receives the data that the DMAC 14a read from the memory 11a and transmits the received data to the microcontroller 1b via the serial transfer path 2. When data is received from the microcontroller 1b, the SCI 15a activates the DMAC 14a and has the received data written to the memory 11a.

FIG. 2 is a block diagram of the memory access monitoring unit (MON) 13a. The memory access monitoring unit (MON) 13b is configured identically with the memory access monitoring unit (MON) 13a.

The memory access monitoring unit (MON) 13a includes an update checking section 131 and a register 132. A data address area for storing data referred by other microcomputers can be set in the register 132 using a base address and offset address. The data address area set in the register 132 is referred to as an "referred area."

Namely, when the data update monitoring means is provided with a data address area setting means having a data address area setting function, the data update monitoring means can set a data address area to be monitored of the data storage means.

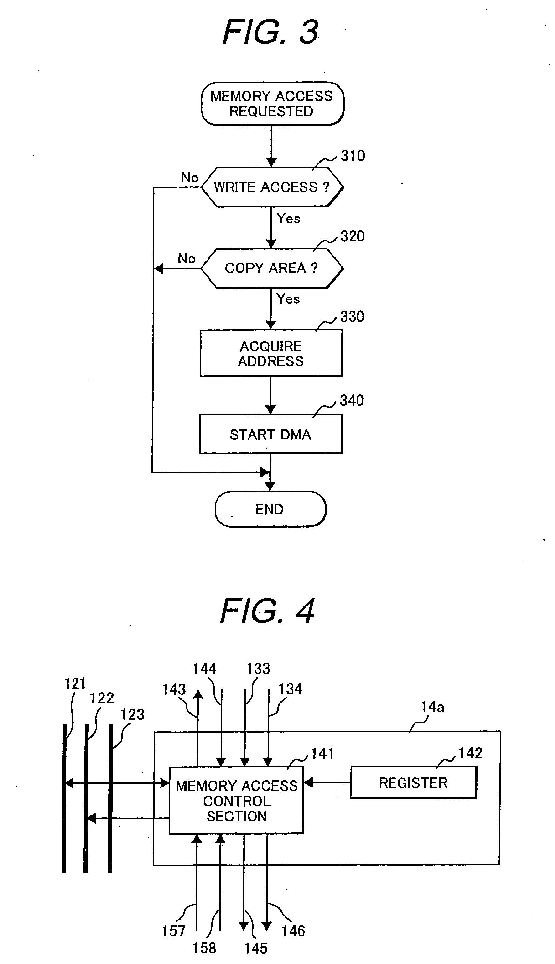

How the memory access monitoring unit (MON) 13a operates will be described below with reference to the flowchart shown in FIG. 3.

When the update checking section 131 checking the bus 12a for access made from the CPU 10a to the memory 11a detects a write access to the referred area (steps 310 and 320), it acquires the access address from the bus 12a (step 330) and starts a DMA transfer (step 340) by outputting a DMA start signal 133 and the acquired address 134 to the DMAC 14a. Subsequently, the DMAC 14a transfers the updated data to the SCI 15a by performing a process being described later.

FIG. 4 is a block diagram of the direct memory access control unit (DMAC) 14a. The direct memory access control unit (DMAC) 14b is configured identically with the direct memory access control unit (DMAC) 14a.

The direct memory access control unit (DMAC) 14a includes a memory access control section 141 and a register 142. The register 142 has various settings and status flags required in carrying out DMA transfer, but they will not be described here.

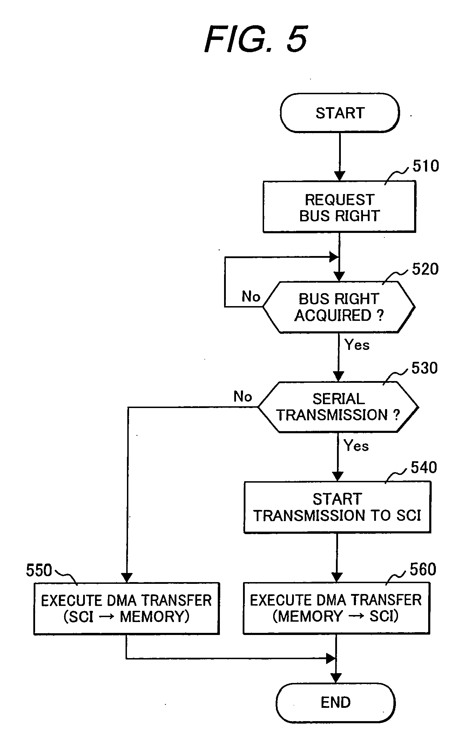

How the direct memory access control unit (DMAC) 14a operates will be described below with reference to the flowchart shown in FIG. 5.

When the DMA start signal 133 and the acquired address 134 are received from the MON 13a, the memory access control section 141 first outputs a bus right request signal 143 to the CPU 10a (step 510). When a bus right permission signal 144 is received from the CPU 10a (step 520), the memory access control section 141 having received the DMA start signal 133 from the MON 13a determines that a serial data transmission is requested (step 530), starts a transmission to SCI by outputting a serial transmission start signal 145 to the SCI 15a (step 540), and thereby executes a DMA transfer from the memory 11a to the SCI 15a (step 560).

When a DMA start signal 157 and a reception address 158 received by the SCI 15a are received from the SCI 15a, the memory access control section 141 first outputs a bus right request signal 143 to the CPU 10a (step 510). When a bus right permission signal 144 is received from the CPU 10a (step 520), the memory access control section 141 having received the DMA start signal 157 from the SCI 15a determines that a serial data reception is requested (step 530) and executes a DMA transfer from the SCI 15a to the memory 11a (step 550).

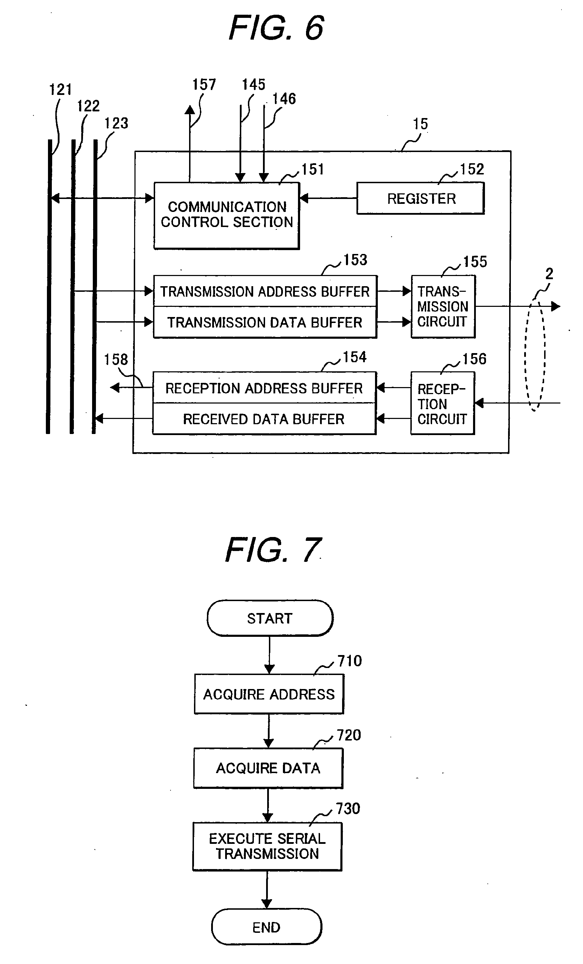

FIG. 6 is a block diagram of the serial communication interface unit (SCI) 15a. The serial communication interface unit (SCI) 15b is configured identically with the serial communication interface unit (SCI) 15a.

The serial communication interface unit (SCI) 15a includes a communication control section 151, a register 152, a transmission address/data buffer 153, a reception address/received data buffer 154, a transmission circuit 155, and a reception circuit 156. The register 152 has various settings and status flags required in carrying out serial communications, but they will not be described here.

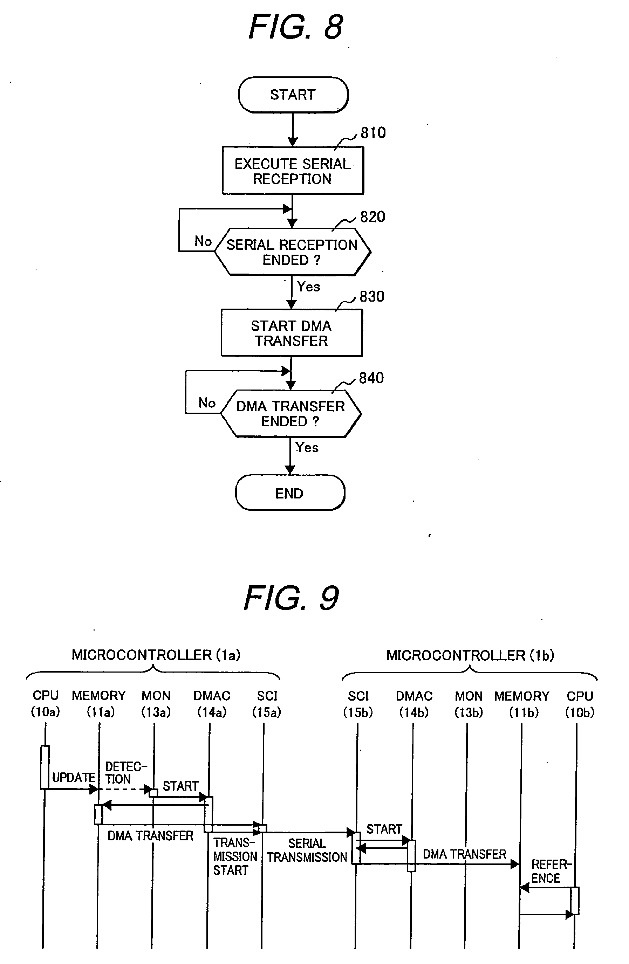

How the serial communication interface unit (SCI) 15a operates will be described below with reference to the flowcharts shown in FIGS. 7 and 8.

When a serial transmission start signal 145 is received from the DMAC 14a, the SCI 15a acquires the address that the DMAC 14a outputted to the bus 12a for a DMA transfer (step 710) and also acquires, from the bus 12a, the data read by a DMA transfer from the memory 11a (step 720). The SCI 15a then serially transmits the acquired address and data (step 730).

When a transfer signal is received from another microcontroller via the serial transfer path 2, the SCI 15a serially receives an address and data (step 810). When the serial data reception ends (step 820), the SCI 15a starts a DMA transfer by outputting the reception address 158 and a DMA start signal 157 to the DMAC 14a and writes the received data to the reception address on the memory 11a (step 830).

FIG. 9 is a time chart of a process in which the data in the microcontroller 1a referred by the microcontroller 1b is updated.

When the CPU 10a of the microcontroller 1a updates an referred area on the memory 11a, the MON 13a detects the update and activates the DMAC 14a. The DMAC 14a then executes a DMA transfer to transfer the update data from the memory 11a to the SCI 15a. At the same time, the DMAC 14a makes the SCI 15a start a serial data transmission to serially transmit the data and corresponding address received via the DMA transfer to the microcontroller 1b. When the data and address are received from the microcontroller 1a, the SCI 15b of the microcontroller 1b activates the DMAC 14b. The DMAC 14b then executes a DMA transfer from the SCI 15b to the memory 11b to update the data stored at the address. As a result, the CPU 10b is allowed to refer to the updated data.

According to the above embodiment, in cases where data referencing is made by serial communications between microcomputers, update data can be transferred from a microcomputer having original data to a microcomputer having copied data without being intervened by any CPU included in available computing means, so that the load on the CPUs included in the computing means can be reduced. Furthermore, the time lag between original-data update and copied-data update is shortened. This improves the real-time capability of the apparatus.

According to the above embodiment, each processing unit is provided with the data transfer means that can transfer data, at least, between the data storage means and the communication means; and, when the data update monitoring means detects update by the computing means of the data stored in the data storage means, the updated data is transferred to the communication means via the data transfer means.

Making the data transfer means available as a function generally applicable to various types of DMA transfers will enable the circuit configuration of the data update monitoring means to be simplified.

The data update monitoring means is provided with the data address area setting means that sets a data address area to be monitored of the data storage means. Only when data stored in the data address area set by the data address area setting means is updated, the data update monitoring means acquires the updated data and corresponding address, transfers them to the communication means, and starts transmitting them to another one or more of the processing units.

This allows data communications is performed only when the referred data is updated, so that the load on the data transfer path can be reduced.

Furthermore, each of the processing units is provided with the data transfer means that transfers data, at least, between the data storage means and the communication means. The processing unit, when the communication means receives data and a corresponding address from another processing unit, writes the data to the corresponding data address area of the data storage means via the data transfer means.

Therefore, the computing means is not required to perform processing to write the data received from another processing unit via the communication means to the data storage means, so that the processing load on the computing means can be reduced.

## Claims

1. A vehicle control apparatus comprising a plurality of processing units (1a, 1b) each having a computing means (10a), a data storage means (11a), and a communication means (15a):
wherein each of the plurality of processing units (1a, 1b) has a data update monitoring means (13a), the data update monitoring means (13a) monitors the data update by monitoring access to the data storage means (11a) and, upon detecting update of data in the data storage means (11a), sending the updated data and a corresponding address to another one or more of the plurality of processing units (1a, 1b) via the communication means (15a).

2. A vehicle control apparatus comprising a plurality of processing units (1a, 1b) each having a computing means (10a), a data storage means (11a), and a communication means (15a):
wherein each of the plurality of processing units (1a, 1b) has a data update monitoring means (13a), the data update monitoring means (13a) monitoring access to the data storage means (11a), acquiring, upon detecting update of data in the data storage means (11a), the updated data and a corresponding address, transferring the data and address to the communication means (15a), and starting transmission to another one or more of the plurality of processing units (1a, 1b).

3. The vehicle control apparatus according to claim 2:
wherein each of the processing units (1a, 1b) has a data transfer means (12a) which transfers data, at least, between the data storage means (11a) and the communication means (15a); and
wherein the data update monitoring means (13a) transfers, upon detecting update by the computing means (10a) of data in the data storage means (11a), the updated data and the corresponding address to the communication means (15a) via the data transfer means (12a).

4. The vehicle control apparatus according to claim 2,
wherein the data update monitoring means (13a) has a data address area setting means which sets a data address area to be monitored of the data storage means (11a), the data update monitoring means (13a) acquiring, upon detecting update of data in the data address area set by the data address area setting means, the updated data and the corresponding address, transferring the data and the address to the communication means (15a), and starting transmission to another one or more of the plurality of processing units (1a, 1b).

5. A vehicle control apparatus comprising a plurality of processing units (1a, 1b) each having a computing means (10a), a data storage means (11a), and a communication means (15a):
wherein each of the processing units (1a, 1b) has a data transfer means which transfers data, at least, between the data storage means (11a) and the communication means, and
wherein the communication means (15a) writes, when data and an address are received from another one of the plurality of processing units (1a, 1b), the received data to the data address area specified by the received address of the data storage means (11a) via the data transfer means (12a).

6. The vehicle control apparatus according to claim 2,
wherein the data update monitoring means (13a) has an update checking section (131) and a register (132), the register (132) having a data address area setting means provided with a function for setting a data address area to be monitored of the data storage means (11a).
